# EUROPEAN PATENT APPLICATION

(11) **EP 3 588 403 A1**
(43) Date of publication of application: **01.01.2020**
(21) Application number: 18179486.8
(22) Date of filing: 25.06.2018
(51) Int. Cl.: G06Q 10/08

(54) **INNOVATIVE METHOD OF COUPLING DIFFERENT PRINT SHAPES ON A SINGLE COIL**

(71) Applicant: Labelado S.r.l., 12051 Alba (CN) (IT)
(72) Inventor: ARTUFFO, Stefano, Alba (CN) (IT)
(74) Representative: Bruni, Giovanni

(57) **Abstract**

*Method (100, 200) of coupling different print shapes on a single coil and their production, characterized by the following steps:*
*- (S101) access to a specific on-line site,*
*- (S102) display the active quotes on the home page,*
*- (S103) enter in the active quotes section,*
*- (S104) insert in the filter section the technical features of the own labels,*
*- on the basis of the selected filters, (S105) identify the most similar active quotes and, alternatively,*
*- (S106) add the user's choice to an existing quote with acceptance of shape, size, substrate, already defined by a previous user, or*
*- (S107) create a new quote based on different technical features, because none of the options meets the required requirements,*
*- (S108, S118) confirm the chosen quote by an order,*
*- (S201) transmit the order from the on-line site to a management program,*
*- (S202) prepare the pre-printing of files for approval by the user,*
*- (S203) supply the materials necessary for printing and schedule the appropriate printing facilities,*
*- (S204) print the color print in digital format,*
*- (S205) execute the finishing operations in a suitable machine.*

## Description

### Field of the invention

The present invention relates to a method of coupling different print shapes on a single coil. The method relates to the field of printing adhesive labels made of paper or polyester on a coil used in the food and industrial field in general.

### Background art

As well known, and in extreme synthesis, the era of coil printing machines began in the so far 1875. The machines were gradually improved in yield and quality of printing. Already at the beginning of the nineties of the last century, great changes in the print and media field were announced. The World Wide Web was taking its first steps and new digital technologies appeared on the scene in the printing technique. Today, with analogic and digital technologies, adhesive labels, banknotes, books, brochures, exhibitors, decorations, labels, cardboard and film packaging, catalogs, advertising leaflets, newspapers and much more are printed, finished and, in part, processed.

Furthermore, today, the industrial printing of adhesive labels has become a technology used not only for traditional markets, wine labels, foods, chocolates, etc., but also to enrich the surfaces used every day, such as: personal items, personalized gifts, decorative surfaces and materials for the electronics industry. There is therefore a growing demand for customization of objects and commercial products in general, according to their own tastes and visual sensibilities.

To achieve this, the printing of adhesive labels in paper or polyester on a coil is widely required.

However, industrial printing on coils is characterized by extremely high start-up costs for printing machinery due to multiple changes of paper and die-cut (as well as other specific processes), depending on the type of elements to be printed.

There is therefore the need to reduce these costs and waste due to multiple machine starts due to the necessity to replace the coil.

### Summary of the invention

The object of the present invention is to provide a method for combining different print shapes on a single coil and thus allowing, with a single start-up of the printing machine, to obtain as many prints as possible. This result is obtained by means of a method of coupling print shapes of different users on the same coil, provided that the different print shapes share the same paper and form of printing or punch. This therefore allows a sharing of start-up costs among the various users, as well as a substantial reduction in waste due to the various changes and start-ups required if a single print is to be made for each user.

According to the present invention, the system is defined by the features set forth in the annexed independent claim.

Further embodiments of the invention, preferred and / or particularly advantageous, are described according to the features set forth in the attached dependent claims.

### Brief description of the drawings

The invention will now be described with reference to the enclosed drawings, which illustrate some non-limiting embodiments thereof, in which:
- Figure 1 is a flow chart of the system which is used by a user according to an embodiment of the present invention,
- Figure 2 is a flow chart of the system for the production process according to an embodiment of the present invention, and

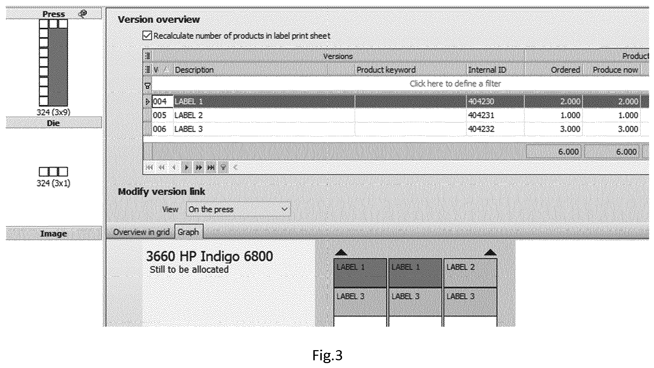

- Figure 3 shows a screen that explains the pre-printing function and the schedule following the approval of the files.

### Detailed description

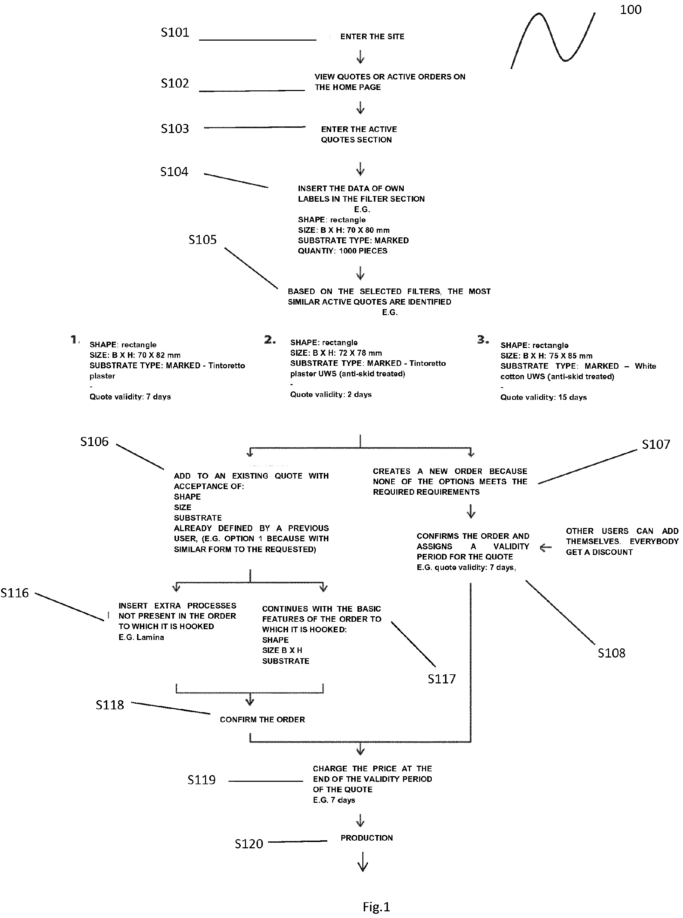

With reference to the attached figures, particularly to Figure 1, 100 indicates the method used by a user as a whole. The method includes the following steps performed by the user:
- S101 enter the site,
- S102 view quotes or active orders on the home page,
- S103 enter the active quotes section,
- S104 insert the data of own labels in the filter section
- S105 based on the selected filters, the most similar active quotes are identified, and two different paths can therefore be identified:
- S106 add the user's choice to an existing quote with acceptance of: shape, size, substrate, already defined by a previous user, (e.g. option 1 because with similar form to the requested), or
- S107 creates a new order because none of the options meets the required requirements.

Step S106 includes the following additional steps:
- S116 insert extra processes not present in the order to which it is hooked, e.g. lamina, or
- S117 continues with the basic features of the order to which it is hooked (specific form, format substrate, etc.),
- S118 confirm the order,
- S119 charge the price at the end of the validity period of the quote, e.g. 7 days,
- S120 produces the labels according to the order made.

The step S107 includes the further phase:
- S108 confirms the order and assigns a validity period for the quote, e.g. validity: 7 days,
and then you get to S119 and S120.

Furthermore, step S104 includes, for example, the selection of shape (rectangle, square, oval, etc.), size (b x h: 70 x 80 mm), type of substrate (marked, smooth, etc.) and the quantity (e.g. 1000 pcs, etc). The step S105 includes, for example, the choice between three types:
1. shape: rectangle, size: 70 X 82 mm, substrate: marked - Tintoretto plaster, Validity Estimate: 7 days;
2. shape: rectangle, size: 72 x 78 mm, substrate: marked - UWS Tintoretto plaster (with anti-skid treatment), validity: 2 days;
3. shape: rectangle, size: 75 x 85 mm, substrate: marked - UWS white cotton (with anti-skid treatment), validity: 15 days.

The steps of the method 100 carried out by the user give the possibility to access the creation of an order or quote online, as well as the possibility of extending the presence of such an order or online quote for a specific duration from 1 to 15 days at most, before printing the same order or online quote.

The other users, who access to the site, display the preferred quote (which will remain anonymous) which includes the desired technical features. A new user who shares at least the card and the shape of an already set order can participate in the user line that will lead to the final printing phase. Once the final order has been defined by the various users, you can proceed with the final print.

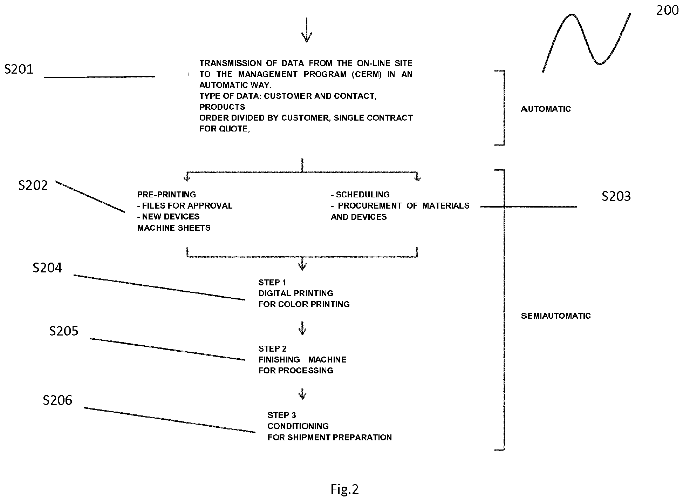

With particular reference to Figure 2, number 200 indicates the method used by the manufacturer as a whole. The system includes the following production phases:
- S201 transmission of data from the on-line site to the management program (CERM) in an automatic way. Type of data are: customer and contact, products, order divided by customer, single contract for quote,
- S202 set up pre-printing of the files for approval by the customer and once the approval has been received, preparation of the relative printing facilities. Examples of such plants are cutting dies or, in the case of extra machining such as lamination, a hot punch plant. Then, prepare the files of the different customers in combination with a single print sheet or with multiple sheets, depending on the requested quantities.
- S203 scheduling and procurement of materials and devices,
- S204 step 1: digital printing for color printing,
- S205 step 2: finishing machine for processing,
- S206 step 3: conditioning for the preparation of the shipment. Specifically, the pre-printing step S202and the scheduling of the different files is a fundamental step of the procedure. The combination of files and their ordering is an extremely important operational phase.

The orders matched and present on the website as required by the different users, achieve the highest level of productivity in relation to the lower number of start-ups and the maximum level of savings possible with a maximum limitation of waste.

An example of the pre-printing function, called "coupling.png", is useful to explain this operational function and the scheduling following the approval of the files. For example, on the website there are three labels: Label 1, Label 2 and Label 3, which share the features of paper and die-cut. Additional work will be handled manually. For example, Label 1 and Label 2 can be combined on the same "machine sheet" as they do not have extra processing; Label 3, for example, has the hot foil as additional processing. This processing involves the use of a punch and its specific shape, which must be inserted separately. The labels will still be printed all on the same coil and will share the die-cut. When you will arrive at the label called Label 3, in addition, in the finishing machine the driver will have to proceed with a new start-up to add the required processing to the label.

Advantageously, the method object of the present invention allows an efficient interconnection between the users on the web that allows them to be combined with other users to order jobs that are characterized by having some elements to share, in addition to the shape and the punch also common times and number of printings.

In this way, it is possible to share the requests of several users, even residents in very distant regions, through the electronic connection and thus allow them to obtain huge savings, as already mentioned, mainly due to the reduction in start-up costs of printing machines. Advantageously, the payments that must be made by users are "frozen" through PayPal systems until the expiry of the date decided by the first customer, i.e. the first user who created the order.

Advantageously, the system provides a proprietary on-line estimator, finished and attached to a website designed by website programmers. The site will communicate all the technical data necessary with the manufacturer through XML and Web Services that will be sent to the internal management program (CERM).

The preparation of orders and commissioned orders is carried out completely automatically; the only operations managed by operators will be pre-printing (file and approval) and final printing.

The printing is carried out on digital coil machines in a first step in which the users are combined for paper and in the second step in which the users are matched for the same die-cut on a finishing machine (provided with extra nobilitations such as sheets, reliefs, silk-screen and varnishes) .

Finally, the resulting coil is controlled and divided into the coils that will be sent to the respective customers.

Even if at least an embodiment was described in the brief and detailed description, it is to be intended that there exist many other variants in the protection scope of the invention. Further, it is to be intended that said embodiment or embodiments described are only example and do not limit in any way the protection scope of the invention and its application or configurations. The brief and detailed description gives instead the experts in the field a convenient guide to implement at least an embodiment, while it is to be intended that many variations of the function and elements assembly here described can be made without departing from the scope of protection of the invention encompassed by the appended claims and/or technical/legal equivalents thereof.

## Claims

1. Method (100, 200) of coupling different print shapes on a single coil and their production, **characterized by** the following steps:
- (S101) access to a specific on-line site,
- (S102) display the active quotes on the home page,
- (S103) enter in the active quotes section,
- (S104) insert in the filter section the technical features of the own labels,
- on the basis of the selected filters, (S105) identify the most similar active quotes and, alternatively,
- (S106) add the user's choice to an existing quote with acceptance of shape, size, substrate, already defined by a previous user, or
- (S107) create a new quote based on different technical features, because none of the options meets the required requirements,
- (S108, S118) confirm the chosen quote by an order,
- (S201) transmit the order from the on-line site to a management program,
- (S202) prepare the pre-printing of files for approval by the user,
- (S203) supply the materials necessary for printing and schedule the appropriate printing facilities,
- (S204) print the color print in digital format,
- (S205) execute the finishing operations in a suitable machine.

2. Method (100) according to claim 1, wherein to said step of (S106) adding the user's choice to an existing quote, further steps follow:
- (S116) insert an extra work not present in the chosen quote, or
- (S117) continue with the existing features in the chosen quote.

3. Method (100) according to claim 1, wherein (S108) a further quote for assigning a validity period for the order is added to said phase of (S107) creating a new quote.

4. Method (100) according to claim 2 or 3, further comprising the steps of:
- (S119) debit the price at the end of the validity period of the quote.

5. Method (100) according to any of the preceding claims, wherein at the end of the step (S205) of executing the finishing operations in a suitable machine, (S206) the shipment is arranged upon the opportune conditioning of the finished product.
